(19) Europäisches Patentamt
European Patent Office
Office européen des brevets

(11) **EP 4 455 479 A1**

(12) **EUROPEAN PATENT APPLICATION**

(43) Date of publication:
**30.10.2024 Bulletin 2024/44**

(21) Application number: **23169402.7**

(22) Date of filing: **24.04.2023**

(51) International Patent Classification (IPC):
***F03D 13/10*** (2016.01)

(52) Cooperative Patent Classification (CPC):
**F03D 13/10; F03D 80/505;** F05B 2260/31;
F05B 2260/87

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Siemens Gamesa Renewable Energy
A/S**
**7330 Brande (DK)**

(72) Inventors:
• **Freire, Nuno Miguel Amaral**
**7330 Brande (DK)**

• **Godridge, Paul**
**Cheadle, SK8 7HX (GB)**
• **Hartley, Joseph**
**Crewe, CW2 7JY (GB)**
• **Radhakrishna Pillai, Rahul**
**8210 Aarhus (DK)**
• **Szczesny, Ireneusz Grzegorz**
**7160 Tørring (DK)**
• **Wu, Zhan-Yuan**
**Sheffield, S10 4BB (GB)**

(74) Representative: **SGRE-Association**
**Siemens Energy Global GmbH & Co. KG**
**SE I IM P Intellectual Property**
**Siemenspromenade 9**
**91058 Erlangen (DE)**

(54) **UNLOCKING A ROTOR OF A WIND TURBINE**

(57)     It is described a method of aiding unlocking, and in particular unlocking, a rotor of a wind turbine (1570) locked by a locking system (1575), the rotor being coupled to an electrical machine (1571) and rotatably supported by a rotor bearing, the method comprising: providing a torque reference (100, 200, 300, 700, 1100) or an equivalent current reference (1300); controlling the electrical machine (1571) based on the torque reference (100); generating, by the electrical machine, a mechanical torque acting on the rotor according to the torque reference; wherein the torque reference (100) defines a time course (t1,t2) of a target torque (tt1, tt2).

## FIG 1

EP 4 455 479 A1

## Description

Field of invention

The present invention relates to a method and an arrangement of aiding unlocking, and in particular unlocking, a rotor of a wind turbine locked by a locking system. The invention relates further to a wind turbine comprising the arrangement.

Art Background

During services or maintenance of a wind turbine, a wind turbine rotor may be needed to be locked using lock pins inserted between the rotor (or a brake disk rotating with the rotor) and a stator for securing the rotor from accidental movement. For turbines having roller or ball bearings for supporting the rotor, the lock pins may normally get loosen by moving the rotor by yawing and then extracting the pins by a hydraulic or electric mechanism.

However, with particular types of bearings, such as fluid film bearings (FFB bearings), the friction may build up quite high after a long stillstand time and the rotor may get stuck by being pressed against surface of brake disc hole and the lock-pin may not be taken out by the use of the hydraulic or electric mechanism. For particular types of rotor bearings, if the rotor has been locked for a substantial period of time, the rotor bearing friction may be relatively high and the rotor would not be moved by applying a conventional method of yawing (and blade pitching).

Due to the stick-slip effect of the bearing load, the conventional method of closed-loop position control may not be applicable in a straightforward manner for the rotor movement.

Therefore, a conventional method of lock-pin extraction or unlocking may be insufficient.

Thus, there may be a need for a method and a corresponding arrangement of aiding unlocking, and in particular unlocking, a rotor of a wind turbine locked by a locking system, wherein a reliable and safe unlocking of the rotor locked by a locking system is achieved without putting components of the wind turbine at risks for damage.

Summary of the Invention

This need may be met by the subject matter according to the independent claims. Advantageous embodiments of the present invention are described by the dependent claims.

According to an embodiment of the present invention it is provided a method of aiding unlocking, and in particular unlocking, a rotor of a wind turbine locked by a locking system (e.g. relative to a stator), the rotor being coupled to an electrical machine (e.g. generator system) (e.g. of the wind turbine) and rotatably supported (e.g. relative to a stator) by a rotor bearing, the method comprising: providing (e.g. accessing or generating) a torque reference; controlling the electrical machine based on the torque reference; generating, by the electrical machine, a mechanical torque acting on the rotor according to the torque reference; wherein the torque reference defines a time course of a target torque.

At the beginning of application of the method, the rotor may be locked by a locking system, for example to a stator or to a stationary part of the electrical machine. The rotor may thereby stand still and may be mechanically fixed (by the locking system) to the stator or a stationary part of the electrical machine.

The locking system may comprise one or more mechanical locking elements such as bolts and/or pins. The locking system may comprise (at the stationary part and/or the rotor) one or more openings or through holes or bore and may comprise (at the stationary part and/or the rotor) further through openings or bores. The locking system further may comprise several locking members insertable into the one or more locking holes of the stationary part and the rotor part. For locking the rotor to the stationary part, respective locking holes (on one hand on the rotor and on the other hand at the stationary part) may be required to be aligned to be substantially coincident or having overlapping alignment of the respective locking openings. The one or more locking members may then, for locking, be inserted both into the locking holes of the stator shaft as well as the aligned locking holes at the rotor part. When locked, the locking members, in particular locking pins or lock-pins or bolts, may slightly shift within the lock-holes to be pressed to one limiting surface area of the respective lock-holes, for example due to torque or force acting on the rotor and/or mounted rotor blades.

When locked, the rotor may have mounted one or more wind turbine blades. According to embodiments, one or more wind turbine blades may be missing, for example due to exchange work or assembly/disassembly work.

The method may be performed during assembly/disassembly of the wind turbine, in particular during mounting one or more rotor blades to the rotor or during any maintenance work and may require to (temporarily) fix the rotor relative to the stationary part of the generator for any kind of repair or maintenance work.

The electrical machine may primarily be designed to operate in a generator mode which produces or generates electric energy upon rotation of the rotor by wind impacting to rotor blades mounted at the rotor. The electrical machine may for example be configured as a synchronous electrical machine, in particular permanent magnet synchronous electrical machine. The electrical machine may provide plural electrical phases, such as three electrical phases. The electrical machine may comprise for each of one or potentially plural stator segments a multi-phase electrical winding set. Each or one or more of the winding sets may be connected to one or more converters.

The rotor bearing may be configured to rotatably support the rotor relative to the stationary part of the generator, in particular relative to a stator of the electrical machine.

The torque reference may define plural target torque values for plural subsequent points in time. The torque reference may for example be defined or represented as an electronic data structure, for example stored in an electronic storage. Providing the torque reference may involve to access the electronic data from the electronic storage. In other embodiments, the torque reference may be (online) calculated.

The torque reference (also considered as a target torque time course) may have been precalculated or predetermined based on the configuration of the wind turbine, in particular respecting or accounting for the mechanical configuration of the rotor including one or more mounted wind turbine blades and also taking into account a friction characteristic of the rotor bearing, in particular also taking into account a standstill time of the rotor bearing, i.e. the time the rotor had been locked.

Thus, the particular torque reference being used during the method may dynamically be selected based on particular state information of the wind turbine and/or one or more operational parameters and in particular the state of the rotor bearing and/or the mechanical state of the entire drive train comprising the rotor, the rotor blades, a potential gearbox and other components which affect the mechanical constitution of the drive train. In particular, also the azimuthal position of the rotor may be considered.

A plurality of torque reference instances may for example be referenced by one or more operational parameters or state parameters, for example be looked up using a look-up table.

Controlling the electrical machine based on the torque reference may involve to supply control signals to the electrical machine, in particular via a control module and/or a converter. The converter may comprise plural controllable switches, such as power transistors, such as IGBTs, having individual gates, to which gate control signals may be supplied from the control module. The controllable switches may be controlled by respective gate driver signals, such that the electrical machine generates a mechanical torque according to a given torque reference. Thereby, the electrical machine may in particular be caused to generate a mechanical torque across plural points in time which adhere to the torque reference, i.e. the target torque for the plural points in time.

When the electrical machine is controlled according to the torque reference (in particular instead of controlling a rotor position), situations may be handled in an improved manner, in which for example the rotor bearing is stuck for example due to long standstill times and in which further the rotor bearing may suddenly be released from being stuck involving sudden decrease of the friction.

The method may or may not require any input of a quantity which indicates the rotor position. In particular, turbines having a fluid film bearing as a rotor bearing may be handled by the method.

According to an embodiment of the present invention the method including performing open-loop control based on the torque reference; and/or wherein the method is not based on a target rotor position; and/or wherein the torque reference is generated such that the target torque acts in a direction to relief a pressing force acting on the locking system, in particular in a direction to move at least one locking pin away from a lock hole edge.

The torque generated by the electrical machine may not be measured and may not be fed back to a control portion for performing the method. The open-loop control may therefore merely involve to supply the torque reference to the electrical machine or electrical machine system including for example further control portions and/or a converter or several converters.

The torque reference may also include a definition of a torque upper limit (e.g. limiting the absolute of the target torque to be below the torque upper limit). In other embodiments, the torque upper limit may be a quantity separate from the torque reference. Nevertheless, the torque reference may stay with all its values for the target torque below the torque upper limit.

The method of aiding unlocking may not rely on or may not require as input the target rotor position. In other embodiments, the method may require as an input the target rotor position, in order for example to modulate, in particular stop, controlling the electrical machine to generate the torque, if it is detected that the rotor actually starts moving or moves an amount larger than a threshold rotor movement amount.

During the locking, i.e. standstill of the rotor, one or more components of the locking system may have set or moved to a position such that a locking element presses against a particular lock-hole edge. This lock-hole edge may be that one edge, which is touched or pressed upon due any mechanical torque or force acting on the entire drive train and exerting any torque or force to the rotor.

The torque reference may be generated to act in a direction opposite to the mechanical torques or forces being exerted on the rotor. Thereby, the torque exerted may be reduced, or the locking pin may slightly be moved away from the lock-hole edge at which it set, when the rotor was locked and standing still. Locking may still be due to the still present locking members, in particular still present inserted locking pins which are still being inserted into the respective lock-holes, thereby still locking the rotor relative to the stationary part of the electrical machine. Nevertheless, by acting in a direction to relief a pressing force on the locking system, withdrawal of the locking members or in particular locking pins from respective lock-holes may be simplified.

The direction in which to act the torque reference (for example acting in a clockwise or anticlockwise manner) may be identified automatically or set e.g. by maintenance personnel observing and/or inspecting the manner of the locking pin or the locking state, in particular how the respective locking members are occupying the respective lock-holes.

In other embodiments, the direction may automatically be determined, for example from analysing the mechanical configuration of the drive train.

According to an embodiment of the present invention, the torque reference comprises an increasing magnitude (or absolute) of the target torque in a first time span.

The torque may have positive of negative sign, the magnitude of the torque may be considered as the absolute of the torque.

The magnitude of the target torque may increase in a linear manner with time or according to a curved section or multiple curved sections according to multiple straight sections having different inclinations depending on the time. Thereby, great flexibility may be provided. Increasing the magnitude of the target torque may in particular be advantageous, if the friction provided by the bearing is not known exactly from the beginning. The method may in particular involve to observe when the rotor starts moving or rotating.

According to an embodiment of the present invention, the torque reference comprises that the magnitude of the target torque stays below a torque upper limit, wherein in particular the torque upper limit is estimated and/or calculated and/or predicted based on at least one of: a type and/or a configuration and/or a state of the rotor bearing; a rotor bearing standstill time span; an azimuthal position of the rotor; a gravity caused torque acting on the rotor, considering gravity of one or more mounted rotor blades; an aerodynamic caused torque acting on the rotor.

The torque upper limit may be determined such that when actually generating a torque having a magnitude not exceeding the torque upper limit by the electrical machine, the rotor is or is not expected to move. The torque upper limit may be determined or estimated such that it may substantially balance a mechanical torque acting on the drive train or in particular the rotor. When the torque generated by the electrical machine balances (i.e. is opposite and has approximately the same magnitude) as the mechanical torque being exerted on the rotor due to the mechanical masses to which the rotor is connected releasing the members of the locking system, may be facilitated.

In other embodiments the torque upper limit may be determined or estimated such that it may substantially exceed a mechanical torque acting on the drive train or in particular the rotor, in order to move the rotor or apply a short stroke.

Embodiments of the present invention provide a method of aiding unlocking, without rotor movement which will be explained, described in detail below.

According to an embodiment of the present invention, the torque reference comprises that the target torque increases up to the torque upper limit without moving the rotor.

When the torque generated by the electrical machine is exerted on the rotor and the torque upper limit is reached, it may in particular balance the torque which is acting on the rotor due to the mechanical configuration and state of the rotor including the rotor blades. When the rotor is not moving, safety may be improved.

According to an embodiment of the present invention, the torque reference comprises that the target torque increases up to the torque upper limit and afterwards substantially stays constant, in particular in a second time span.

It may be advantageous to keep the torque which is generated by the electrical machine substantially constant at the torque upper limit, in order to maintain balancing the torques such that the resulting (net or total) torque acting on the rotor is substantially zero.

Embodiments of the present invention provide a method of aiding unlocking, wherein the rotor moves a particular amount. Also in these embodiments, the electrical machine is controlled based on the torque reference. Also for these embodiments, the position may not be a control variable. Nevertheless, the rotor position may be utilized as an input, for example for detection of rotor movement.

According to an embodiment of the present invention, the method further comprises detecting, at a first time instance, when the rotor starts moving or rotating, in particular the target torque thereby having a first torque value; wherein the torque reference comprises that the target torque decreases after the first time instance, in a second time span, in particular to a value being smaller than the first torque value, wherein in particular the first time instance defines an end of the first time span and beginning of the second time span.

The rotor may start moving or rotating, since the target torque as generated by the electrical machine is larger (in magnitude) than a gravitation and/or friction caused torque acting on the rotor. Thus, decreasing the target torque or defining the torque reference such that the target torque decreases after the first time instance may advantageously act against still further moving or rotating the rotor. The target torque after the first time instance may either be decreased to substantially zero or to any value above zero but smaller than the first torque value.

According to an embodiment of the present invention, the torque reference comprises that the target torque is substantially zero at the first time instance and/or during the second time span. Thereby, the method may be simplified.

According to an embodiment of the present invention, the method further comprises at least one of: the torque reference comprises that the target torque decreases in the second time span but stays above zero;

and the torque reference comprises that the target torque in a third time span after the second time span stays substantially constant above zero.

After the first time instance, the target torque may decrease in any manner, for example a straight manner or curved manner according to several curved sections or according to several straight sections.

According to an embodiment of the present invention, the electrical machine can be operated in a generator mode or in a motor mode, and/or is controlled by a machine controller, in particular a converter and a converter controller. The electrical machine can generate the torque acting on the rotor according to the torque reference.

According to an embodiment of the present invention, the method further comprises at least one of: determining a rotor position indicating quantity, in particular employing or using at least one of: at least one encoder; at least one Hall sensor; at least one HFI sensorless observer; and/or determining movement of the rotor based on the rotor position indicating quantity; and/or applying vector control of the electrical machine.

At least one Hall sensor may detect a magnetic field or magnetic flux due to the rotating rotor in particular having plural permanent magnets mounted thereon. From the observed or measured flux values or magnetic field values, a processing section may determine the rotor position, for example electrical position.

The HFI sensorless observer may employ high frequency injection of current or voltage into the generator or the electrical machine. Upon injection of the high frequency currents or voltages, voltages measured or currents measured at the electrical machine may depend on the rotational electrical position of the rotor. Then the rotational position of the rotor may be determined based on plural current and/or voltage measurements and processing the measurement results.

The vector control of the electrical machine may involve to transform electrical quantities, such as phase voltage and/or current in a stationary reference frame, into quantities of a rotating coordinate system rotating in synchronicity with the rotor of the electrical machine. The rotating frame may be referred to as a d-q-frame. Quantities in the stationary reference frame which in reality oscillate with a fundamental frequency may substantially be DC quantities in the synchronous rotating d-q-frame, thus simplifying the control.

According to an embodiment of the present invention, the method further comprises: unlocking the locking system in the second time span; and/or applying a brake to the rotor in the second time span; wherein unlocking the locking system comprises extracting a locking pin from a locking hole.

In the second time span, the respective locking system may be in a relieved state in which one or more locking pins are not pressed against respective lock-hole edges. Unlocking the locking system may involve to withdraw one or more locking members, such as locking pins from lock-holes. Thereby, also a particular unlocking tool may be employed, in particular a hydraulic unlocking tool. When the brake of the rotor is applied, security of the method may be improved.

According to an embodiment of the present invention, the rotor bearing includes or comprises at least one of: a fluid film bearing; a roller bearing; a ball bearing.

It should be understood, that features, individually or in any combination, disclosed, described or applied for a method of aiding unlocking and in particular unlocking, a rotor of a wind turbine may also apply, individually or in any combination, to a respective arrangement for aiding unlocking a rotor, according to embodiments of the present invention and vice versa.

According to an embodiment of the present invention it is provided an arrangement for aiding unlocking, and in particular unlocking, a rotor of a wind turbine locked by a locking system, the rotor being coupled to an electrical machine of the wind turbine and rotatably supported by a rotor bearing, the arrangement comprising: a torque reference module for providing a torque reference; the electrical machine; a machine controller connected and adapted to control the electrical machine, in order to generate a mechanical torque acting on the rotor according to the torque reference; wherein the torque reference defines a time course of a target torque, the arrangement in particular comprising: an unlocking tool adapted to unlock the locking system.

The arrangement may be configured to control or carry out the method of aiding unlocking according to an embodiment of the present invention.

According to an embodiment of the present invention it is provided a wind turbine, comprising: a rotor; a locking system adapted to lock the rotor (from rotating relative to a stator); a rotor bearing by which the rotor is rotatably supported (relative to a stator), an arrangement for aiding unlocking, and in particular unlocking, the rotor according to the preceding embodiment.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Brief Description of the Drawings

Embodiments of the present invention are now described with reference to the accompanying drawings. The invention is not restricted to the illustrated or described embodiments.

Fig. 1 illustrates a reference torque as applied according to an embodiment of the present invention;

Fig. 2 illustrates a reference torque as applied according to another embodiment of the present invention;

Fig. 3 illustrates a reference torque as applied according to still another embodiment of the present invention;

Fig. 4 schematically illustrates a functional diagram employed in a method and an arrangement for aiding unlocking of a rotor according to an embodiment of the present invention;

Fig. 5 illustrates a load on a rotor bearing after different standstill times;

Figs. 6, 7 illustrate test results of applying a method for unlocking or aiding unlocking a rotor including rotor movement according to an embodiment of the present invention;

Figs. 8, 9, illustrate test results of applying a method for unlocking or aiding unlocking a rotor including rotor movement according to another embodiment of the present invention;

Fig. 10, 11, illustrate test results of a method of aiding unlocking a rotor without rotor movement according to an embodiment of the present invention;

Fig. 12 illustrates in a partial broken away view a portion of a wind turbine according to an embodiment of the present invention including an arrangement for aiding unlocking a rotor according to an embodiment of the present invention.

Detailed Description

The illustration in the drawings is in schematic form. It is noted that in different figures, elements similar or identical in structure and/or function are provided with the same reference signs or with reference signs, which differ only within the first digit. A description of an element not described in one embodiment may be taken from a description of this element with respect to another embodiment.

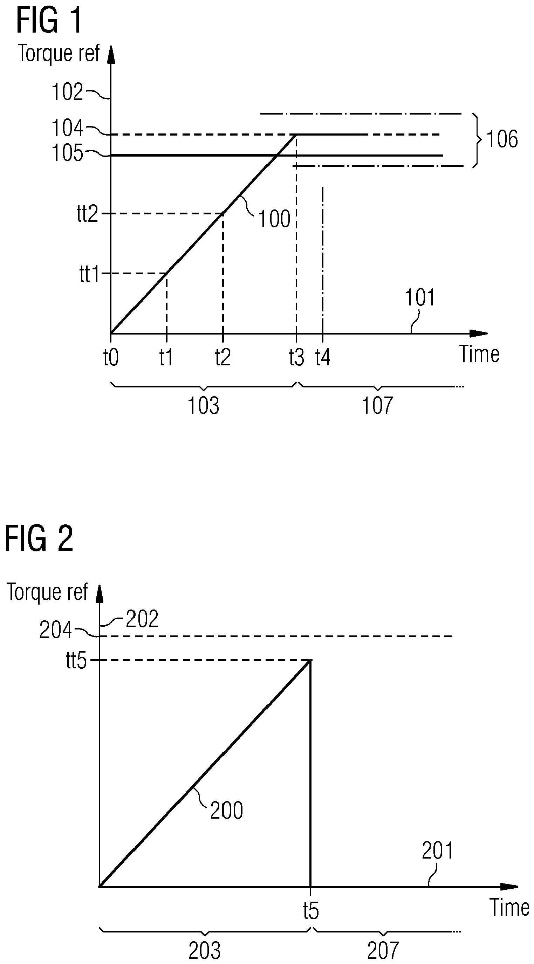

**Fig. 1** schematically illustrates in a coordinate system having an abscissa 101 indicating the time and having an ordinate 102 indicating the torque, a torque reference 100 as applied in a method of aiding unlocking a rotor of a wind turbine according to an embodiment of the present invention. According to the method, the electrical machine is controlled based on the torque reference 100 in order to aid unlocking a rotor of a wind turbine locked by a locking system (for example relative to a stator of the electrical machine).

The electrical machine is then generating a mechanical torque acting on the rotor according to the torque reference 100. As can be appreciated from Fig. 1, the torque reference 100 defines a time course of a target torque. For example, at a point in time t1, the reference torque 100 defines a target torque tt1 and at a point in time t2, the torque reference 100 defines a target torque tt2. The target torque tt2 is greater than the target torque tt1. The torque reference 100 includes an increasing target torque in a first time span 103 reaching from the point in time t0 to the point in time t3. The increase is in the illustrated embodiment a linear increase of the target torque with time.

The torque reference 100 is limited by a torque upper limit 104. Thus, the target torque always stays below or at most at the torque upper limit 104. The horizontal line indicated with reference sign 105 indicates the gravity load acting on the rotor. The torque upper limit is greater than the gravity load 105.

The interval 106 indicates a margin of error allowed for the generator torque with the particular rotor bearing (e.g. FFB)) as installed at the wind turbine. The target torque as defined by the reference torque 100 equals to the torque upper limit 104 for times larger than t3.

At or after a point in time t4, the locking system which locks the rotor may be unlocked, in particular within the second timespan 107 starting at the point in time t3 when the target torque reaches the torque upper limit 104. When the method is applied for unlocking the rotor, the target torque increases up to the torque upper limit 104 without moving the rotor.

Further, as can be appreciated from Fig. 1, the target torque increases up to the torque upper limit 104 and afterwards substantially stays constant, in particular in the second timespan 107.

The torque reference (defining a time course of the target torque) 100 illustrated in Fig. 1 may also be referred to an unlocking method without rotor movement, wherein a balancing torque is applied. Thus, it is enabled to have the lock-pin extracted without the pins being moved away from the lock-hole edges, as long as the pressing force on the lock-pin can be reduced substantially. In the unbalanced rotor there is a load due to gravity according to the horizontal line 105. Based for example on the rotor standstill time, the bearing stiction to get the rotor stuck may be estimated. For example, based on the rotor mechanical position (azimuth angle), the blade gravity load for unbalanced rotor can be estimated. These estimates can be used as a value for the generator torque limit 104. Ramping up the generator torque towards this limit 104, the pressing force on the lock-pin may be reduced. If the estimation of the torque upper limit 104 is correct, the effect of pressing load would be completely removed. However, a level of error 106 in the load estimation may be allowed. Firstly, the lock-pin can be extracted even if there remains a little pressing force on them. Further, in the case of an FFB, the possible high stiction would tolerate more error in the gravity load estimation, as bearing stiction would resist the rotor movement. When applying the reference torque 100 as illustrated in Fig. 1 monitoring of rotor movement may not be necessary or required thereby simplifying the method. One of the distinctive advantages may be that the low resolution Hall-effect sensors can be applied reliably, as they may be used for generator torque control only, there will be no need for observing their state change for rotor movement. In this case the torque production capability may drop by ~14%, however, with a method of angle adjustment (which is not part of this invention), the torque production can be as high as 100%.

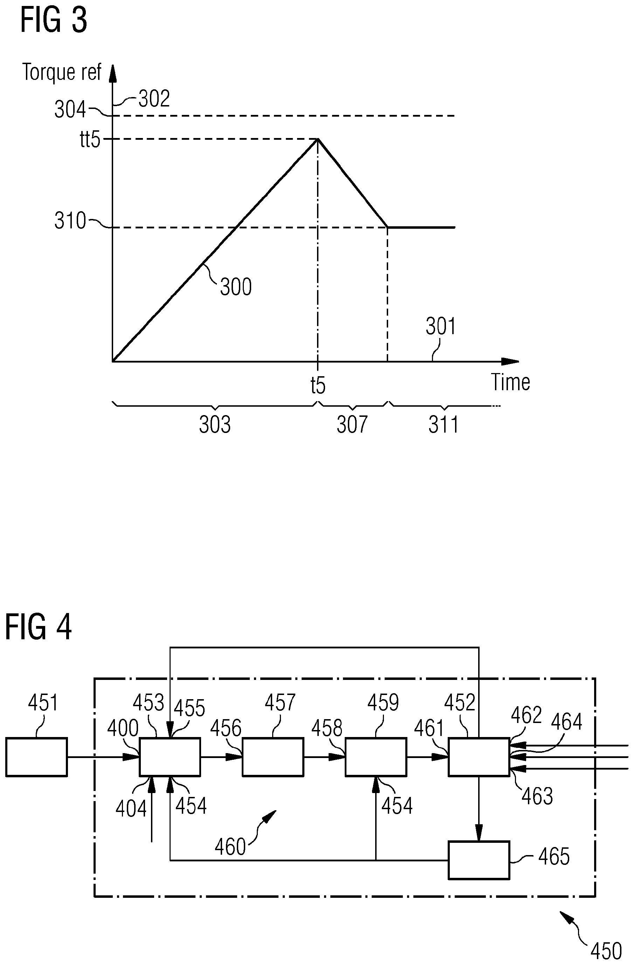

**Figs. 2 and 3** also illustrate in coordinate diagrams having abscissas 201, 301 indicating time and having ordinates 202 and 302 indicating the torque, torque references 200 and 300, respectively, as applied during a method of aiding unlocking a rotor of a wind turbine according to embodiments of the present invention. The torque references 200 and 300 illustrated in Figs. 2 and 3 also define a time course of a target torque which is to be generated by the electrical machine, in particular generator system, of the wind turbine, in order to enable or aid unlocking the rotor starting from a situation, where the rotor is locked by a locking system.

According to the embodiments, for which the reference torque is illustrated in Figs. 2 and 3, however, the rotor may at least slightly move. In Figs. 2 and 3, the respective reference torques 200, 300 include in the first time span 203 an increasing target torque. The increase is in a linear manner in dependency of the time. According to other embodiments, the increasing target torque may increase according to one or more curved sections and/or one or more straight sections having for example different inclinations.

At the point in time t5, rotor movement may be detected. The point in time t5 may be considered as a first time instance. At the first time instance t5, the target torque has a value tt5, being a first torque value. After the first time instance t5, the torque reference defines that the target torque decreases, in particular in a second time interval 207 and 307, respectively. The target torque decreases to a value smaller than the first torque value tt5.

In the example illustrated in Fig. 2, the torque reference decreases at the first time instance t5 to substantially zero. In the second time interval 207, a brake may be applied and/or a locking pin may be unlocked in order to unlock the rotor.

According to the example illustrated in Fig. 3, the torque reference defines that the magnitude of the target torque decreases in the second time span 307 but stays above zero. As can be derived from Fig. 3, the magnitude of the target torque decreases from the first torque value tt5 at the first time instance t5, to a value 310 which is above zero.

In a third time interval 311, the target torque stays constant at the value 310 being reached at the end of the second time interval 307. At or after the first point in time t5 or within the second time interval and/or the third time interval 307, 311, a brake may be applied and/or a locking system may be unlocked in order to unlock the rotor. It is noted that the reference torques 200, 300 illustrated in Figs. 2, 3 always stay below the torque upper limit 204, 304, respectively.

According to the torque references 200, 300 illustrated in Figs. 2 and 3, a short stroke (push) of the rotor by the torque management may be applied. It has been identified from tests that at a small position movement of the rotor, a FFB load does not change much. This nature of the sticking load may be utilized for lock-pin release control. Basically, the rotor may be pushed to a short distance and then by removing the moving force, the rotor would stay at where it stopped.

At a standstill time of about 20 hours it has been measured that the FFB stiction may be about 70% of the maximum value when the bearing is completely dry. After some small rotor movement within the lock-hole, in forward and backward directions, a rotor start was issued and the bearing break away torque was measured at a similar level as observed earlier. This suggests that the bearing stiction would change little by small rotor move. Considering the sticking nature of the FFB bearing load, a generator torque higher than the bearing stiction may be applied, to at least slightly move or rotate the rotor. Once the rotor has moved to the desired distance, the generator torque can be cut or at least decreased. Due to the high bearing sticking, the rotor would stop virtually immediately and the rotor position would remain. As it is only needed for the lock-pin to get loosen, the rotor doesn't have to move to the middle of the lock-hole thereby simplifying the task.

As the FFB stiction may vary with a few factors such as standstill time, and bearing temperature, etc., the generator torque may be ramped up until the rotor is observed to be moving or starting moving. Then the torque may be cut (for example at the first time instance t5 in Fig. 2 or 3) or at least decreased as is illustrated in Fig. 3.

In case of the presence of some gravity load under unbalanced rotor condition, for example, for the application of single blade mounting, the generator torque may be maintained during the rotor pin extraction (see for example Fig. 3). Thereby, the generator torque is ramped up slowly to limit the acceleration torque. The rotor has moved or has slightly rotated by a desired distance, the generator torque may be held and at the same time the turbine brake may be applied. Hence, the rotor will be kept stationary by balancing the torque from the generator, bearing stiction, gravity load and wind aero load. In practice, the generator torque can be ramped down to a positive level within the brake torque capacity, to save some current or/and prevent the rotor from moving further than strictly required, as is shown in Fig. 3. The scheme may also be based on the observation that for lock-pin extraction, the pins don't have to be at the dead centre of the lock-holes, i.e. there is a margin for small deviation and position or the rotor doesn't have to be absolutely stationary when the brake is to be applied.

In Fig. 2, cut of the torque at the first time instance t5 may not consider gravity load. In contrast, in Fig. 3, the decrease of the torque after the first time instance t5 according to the reference torque 300 does not go to zero but to a positive value of torque in order to counteract any potentially present gravity load. Applying either the example shown in Fig. 2 or this one in Fig. 3 may depend on the gravity load and in particular azimuthal position of the rotor and whether there are all rotor blades mounted or only some rotor blades mounted.

**Fig. 4** illustrates a functional scheme for implementing methods for unlocking a rotor, such as those for which the respective reference torques are illustrated in Figs. 1, 2 or 3. Fig. 4 illustrates as a functional diagram an arrangement 450 for aiding unlocking a rotor of a wind turbine according to an embodiment of the present invention. The functional diagram 4 or the arrangement 450 may be configured to apply a torque reference as illustrated in curves 200, 300, 100 in Figs. 1, 2 or 3.

The arrangement 450 comprises a torque reference module 451 for providing a torque reference 400. The torque reference may for example be similar or equal to the torque references 100, 200 or 300 illustrated in Figs. 1, 2, 3. The arrangement 450 further comprises an electrical drive train (including an electrical machine) 452 and a machine controller 460 comprising plural functional blocks. The machine controller 460 is connected and adapted to control the electrical machine 452 in order to generate a mechanical torque acting on the rotor according to the torque reference 400.

In the illustrated embodiment of the arrangement 450, the arrangement comprises a lock-pin release control block 453 which receives the torque reference 400, a torque upper limit 404 and the rotor position 454. Further, the module 453 receives the azimuth position 455 of the rotor as an alternative to 454 for detection of rotor movement. The rotor position 454 represents the electrical rotor position, which is typically obtained from an HFI observer, and encoder or a set of Hall-Effect sensors; the azimuth position 455 represents the mechanical rotor position, which is normally measured from a turbine controller

Based on the input signals, the lock-pin control release module 453 determines a torque demand 456 which is supplied to a conversion module 457. The conversion module calculates a corresponding current demand 458 which is supplied to a vector control module 459. The vector control module also receives the electrical rotor position 454, in order to perform transformation into and out of a d-q-rotating reference frame. The vector control module 459 outputs a voltage demand 461 which is supplied to the electrical machine 452.

The electrical machine 452 may be considered to comprise an electrical generator and a converter and also the entire drive train including bearing and the inertia system. On the generator system or electrical machine 452 the bearing load 462, the gravity load 463 and a brake torque 464 act. Measurement sensors 465 including for example an encoder and/or a Hall sensor and/or sensorless HFI determine the electrical position 454 of the electrical machine 452.

It should be appreciated that Fig. 4 provides a functional diagram 450 of an arrangement for aiding unlocking. The illustrated functions may be provided by modules which are different than illustrated. The entire arrangement 450 may be considered as implementing a converter control.

For lock-pin release, a torque reference 400 may be issued for example from the turbine controller. This torque reference may appear typically as a ramped signal which is time-based. Receiving this torque reference, the converter control 450 may convert it into a generator torque producing current 458, i.e. generator Iq current, which will be controlled by the standard vector control. The torque or current reference may also be derived from an internal controller in the converter control for example, or a signal generator. The required rotor electrical angle for the vector control 459 can be provided from various options of sources, for example HFI sensorless observer, Hall-effect sensors or encoders, etc. A crucial part of the technique may be the torque management for lock-pin release control. When the rotor has been identified to have moved by a desired amount of distance in an angle (for example applying to the torque references 200, 300 illustrated in Figs. 2 and 3), the torque reference may be terminated or held or ramped down and with assistance from the bearing stiction and/or brake torque, the rotor will stop moving. At this point or later in time, the lock-pin can be extracted to complete the lock-pin release.

The detection of rotor movement in module 465 of Fig. 4 within the lock-hole may be supported from various sources, for example rotor azimuth angle, HFI sensorless observer, Hall-effect sensors or encoder. HFI (high frequency injection) sensorless observer may provide the best solution for both generator vector control and lock-pin release control. The encoder may be installed in a turbine permanently or used as a portable kit when the lock-pin release is to be conducted. Hall-effect sensors may be the type of analogue or digital sensors. With the former, the generator position may be derived at a high resolution for generator control and lock-pin release control. The latter gives a robust and low-cost solution for torque control, however, the angle resolution may be too rough for lock-pin release control.

With an alternative technique, i.e. the method as illustrated in Fig. 1 with the use of balancing generator torque, there is no need for rotor movement detection and the Hall-effect sensors may be applied reliably for the lock-pin release.

Thus, according to this embodiment, the torque reference may be applied with no intention of rotor movement (and without actually moving the rotor), but for relieve of pressing force between lock-pin and -hole. This method would simplify the lock-pin unlocking and may not require high resolution and high dynamic position feedback.

The conversion from the torque demand to generator Iq current (in rms) may be formulated as follows:

$$I_q = \frac{T_q}{3p\psi_{pm}} \cdot \frac{1}{\gamma}$$

Thereby, p is the machine pole-pair number, Ψ is the machine air gap flux linkage from the permanent magnet and γ is a factor depending on the position feedback for vector control. For example, in the case of HFI observer, γ = 1 and when digital Hall-effect sensors are used, γ = cos (30°)~1, depending on the rotor electrical position within the sensor measurement range of 60 electrical degrees.

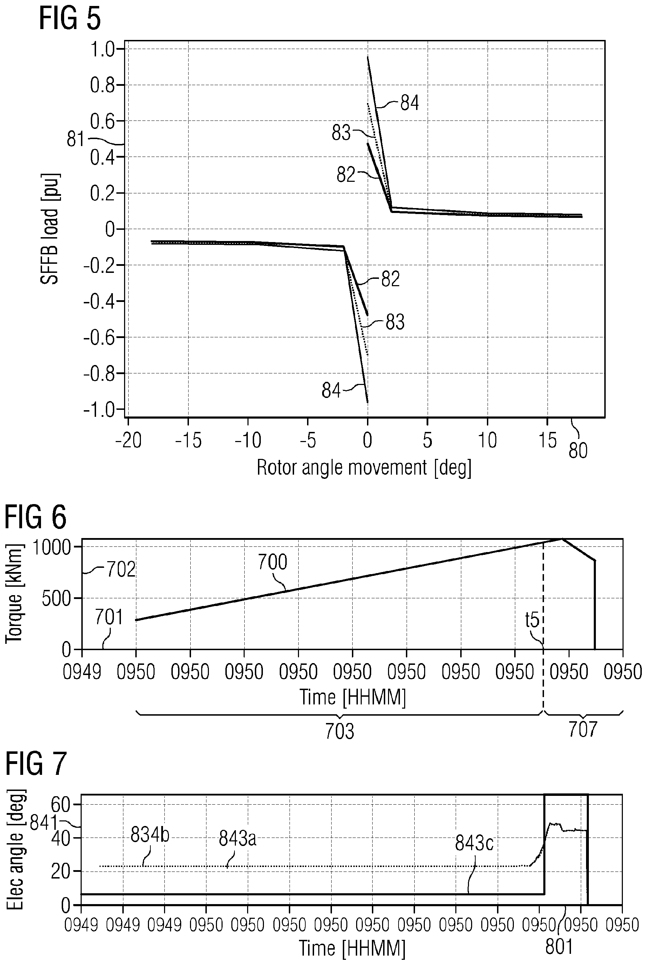

**Fig. 5** illustrates a load as generated by a rotor bearing, in particular a FFB, wherein the abscissa 80 indicates the rotor angle movement and the ordinate 81 indicates the bearing load. The curves 82, 83, 84 indicate the load after stillstand times of 1 hour, 24 hours and 7 days, respectively. The longer the standstill time, the higher the bearing static friction will be. Once a small angle movement is performed, the bearing friction will reduce sharply. Characteristics would conventionally impose difficulties for the position control. For example, when a conventional position controller is trying to move the rotor, a high machine torque (or current) will be required to overcome the bearing high stiction. Therefore, the conventional controller is required to have a high bandwidth to avoid overshoot during position control. Otherwise, the controller has to move the rotor back and the required torque to overcome bearing stiction would change sign. This stick-slip load would add a challenge to the position control and further problems are expected by a conventional positioning control methodology. Embodiments of the present invention can handle the characteristics of bearing load as illustrated in Fig. 5 by basing the control of the unlocking procedure on a torque reference as explained below and above.

**Figs. 6, 7** schematically illustrate in coordinate systems having as an abscissa 701, 801 the time and having as ordinates, 702, 841 the the torque and the electrical angle, respectively, a torque reference 700 and time courses for electrical angle 843a,b,c (as derived by HFI, by an encoder or by a Hall sensor, respectively).

At a first point in time t5 it is observed by the encoder that the rotor moves or starts moving. At this first point in time, the torque reference 700 is decreased to zero or the target torque is decreased to zero. If a movement of the rotor would not have been detected at the first point in time t5, the target torque would follow the course as defined by the torque reference 700 according to the solid line. However, due to start of movement of the rotor, the target torque is decreased to zero at the first point in time t5.

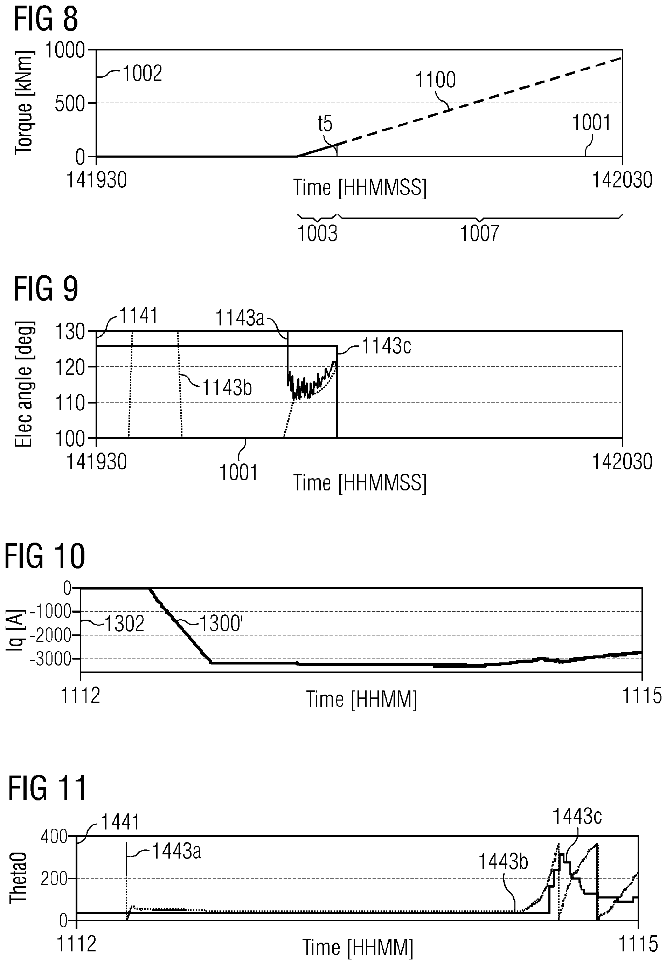

**Figs. 8, 9** schematically illustrate in coordinate systems having as an abscissa 1001, 1101 the time and having as ordinates 1002, 1141 the torque and the electrical angle, respectively a torque reference 1100 and time courses for electrical angle 1143a,b,c (as derived by HFI, by an encoder or by a Hall sensor, respectively).
At the first point in time t5, the HFI observer detects that the rotor starts moving. Therefore, at this first point in time t5, the torque is cut, i.e. the target torque is set to zero. During the second time span 1007, the lock-pin may be released or removed and/or a brake may be applied.
In the test results according to Figs. 6, 7 the encoder is used for vector control and the azimuth position is used for rotor movement detection and thus torque management for lock-pin release. A ramped torque 700 is applied and when the level is sufficient to break the bearing stiction and causes a rotor movement of about 0.3°, the generator torque is cut.
In the tests as illustrated in Figs. 8, 9, the HFI position feedback is used for machine vector control and torque management of lock-pin release. The rotor has moved by about 0.14° and thus the lock-pin release can be well controlled. Due to the presence of the bearing high friction, the rotor stays at where it stops so that the lock-pin would get loose and can be extracted in easy manner.
The method, for which the torque reference 100 is illustrated in Fig. 1, can also be implemented by the functional scheme illustrated in Fig. 4. Without using the azimuth angle or machine electrical angle for management of the lock-pin release, a torque limit (see Fig. 1, reference sign 104) may be applied which may be derived based on a load estimation by consideration of the bearing stiction and/or the torque due to the blade gravity in case of unbalanced rotor. Without the need of monitoring an accurate rotor movement and thus rotor position is an advantage of this technique and thus, a simple low resolution position feedback such as digital Hall-effect sensors can be employed.
Test results for this aiding unlocking without rotor movement is illustrated by test results as given by **Figs. 10, 11** which schematically illustrate in coordinate systems having as an abscissa the time and having as ordinates 1302, 1441 the current Iq and the electrical angle, respectively, a current (reference) 1300' and time courses for electrical angle 1443a,b (as derived by HFI, and by an encoder respectively). Curve 1443c represents the rotor speed, to indicate the rotor motion after the locking system is unlocked.
It should be understood, that the torque may be proportional to the current amplitude as is illustrated in Figs. 10. In this test, the turbine has mounted a single blade and the rotor is locked at a position of 60° where the torque due to the blade gravity would be about 87% of the maximum. To generate the balancing torque, the torque may be increased by the closed-loop control but the rotor doesn't move due to the torque limit. A steady balancing torque will be produced and the rotor won't sit on the lock-pin firmly anymore. At this point, the lock-pin can be extracted successfully without a difficulty. The operation the brake may also be applied which would allow a little more tolerance in the torque limit estimation without moving the rotor.

Embodiments of the present invention may provide:

- a simple lock-pin release control technique which can be applied for the case of a FFB bearing and/or with high gravity load due to unbalanced rotor.
- A method of small rotor angle movement by using a short-pulsed generator torque while taking advantage of the high bearing stiction.
- A method with balancing generator torque but without rotor movement where no accurate position feedback is required for torque management.
- Less likelihood of exciting vibrations in blades and tower, in comparison with the solution by rotor positioning.
- An implementation with use of position feedback from rotor azimuth angle, generator HFI sensorless observer, Hall-effect sensor management or encoder measurement.

Embodiments are also applicable to turbines with roller bearings or ball bearings.

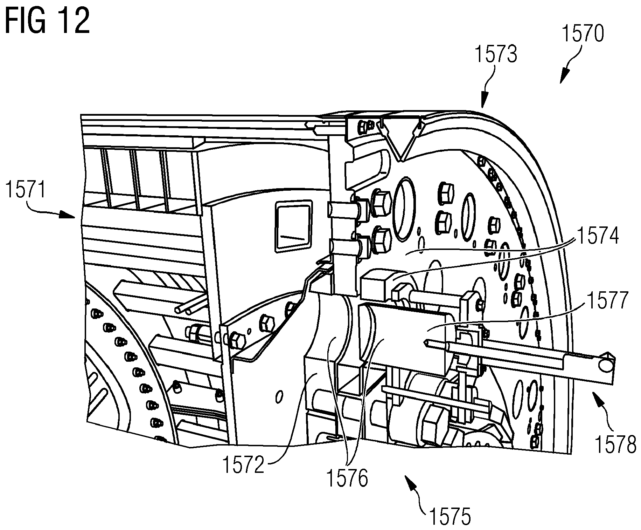

**Fig. 12** schematically illustrates a portion of a wind turbine 1570 according to an embodiment of the present invention including an arrangement for aiding unlocking a rotor according to an embodiment of the present invention. The wind turbine 1570 comprises a not illustrated rotor of a generator 1571. The generator 1571 comprises a stator 1572 including not in detail illustrated multi-phase winding sets. A rotor 1573 is rotatably supported relative to the stator 1572 and not in detail illustrated rotor bearing. A brake disk 1574 is mounted on the rotor 1573. During normal operation, thus, the brake disk 1574 rotates relative to the stator 1572.

For maintenance operation, the wind turbine 1570 comprises a locking system 1575. In the illustrated embodiment, the locking system is embodied by lock-holes 1576 within the stator 1572 as well as within the brake disk 1574. A lock-pin 1577 can be inserted into the lock-holes in order to lock the rotor 1573 relative to the stator 1572. A lock-pin actuator 1578 is provided for inserting and withdrawing the lock-pin 1577. For releasing or unlocking the locking system 1575, a method for aiding unlocking the locking system according to an embodiment of the present invention may be carried out.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

**Claims**

1. Method of aiding unlocking, and in particular unlocking, a rotor of a wind turbine (1570) locked by a locking system (1575), the rotor being coupled to an electrical machine (1571) and rotatably supported by a rotor bearing, the method comprising:

   providing a torque reference (100, 200, 300, 700, 1100), or an equivalent current reference (1300), indicative for the torque reference;
   controlling the electrical machine (1571) based on the torque or current reference (100);
   generating, by the electrical machine, a mechanical torque acting on the rotor according to the torque reference; wherein the torque reference (100) defines a time course (t1, t2) of a target torque (tt1, tt2).

2. Method according to the preceding claim,

   including performing open-loop control based on the torque reference (100); and/or
   wherein the method is not based on closed-loop position control; and/or
   wherein the torque reference (100) is generated such that the target torque acts in a direction to relief a pressing force acting on the locking system (1575), in particular in a direction to move at least one locking pin away from a lock hole edge.

3. Method according to one of the preceding claims, wherein the torque reference (100) comprises an increasing magnitude of the target torque in a first time span (103, 203, 303).

4. Method according to one of the preceding claims, wherein the torque reference (100) comprises that the magnitude of the target torque stays below a torque upper limit (104, 204, 304), wherein in particular the torque upper limit is estimated and/or calculated and/or predicted based on at least one of:

   a type and/or a configuration and/or a state of the rotor bearing;
   a rotor bearing standstill time span;
   an azimuthal position of the rotor;
   a gravity caused torque acting on the rotor, considering gravity of one or more mounted rotor blades;
   an aerodynamic caused torque acting on the rotor.

5. Method according to one of the preceding claims, wherein the torque reference (100) comprises that the magnitude of the target torque increases up to the torque upper limit (104) without moving the rotor.

6. Method according to the preceding claim, wherein the torque reference (100) comprises that the magnitude of the target torque increases up to the torque upper limit (104) and afterwards substantially stays constant, in particular in a second time span (107).

7. Method according to one of the preceding claims 1 to 4, further comprising:

detecting, at a first time instance (t5), when the rotor starts moving or rotating, in particular the target torque thereby having a first torque value (tt5);
wherein the torque reference comprises that the magnitude of the target torque decreases after the first time instance (t5), in a second time span (207, 307), in particular to an absolute value being smaller than the first torque value,
wherein in particular the first time instance (t5) defines an end of the first time span (203, 303) and beginning of the second time span (207, 307).

8. Method according to the preceding claim, wherein the torque reference (200) comprises that the magnitude of the target torque drops substantially zero at the first time instance (t5) and/or remains zero during the second time span (207).

9. Method according to one of the preceding claims 7 further comprising at least one of:

the torque reference (300) comprises that the magnitude of the target torque decreases in the second time span (307) but stays above zero; and
the torque reference comprises that the magnitude of the target torque in a third time span (311) after the second time span (307) stays substantially constant above zero.

10. Method according to one of the preceding claims, wherein the electrical machine (1571) can be operated in a generator mode or in a motor mode, and/or is controlled by a machine controller, in particular a converter and a converter controller;

11. Method according to one of the preceding claims, further comprising at least one of:

determining a rotor position indicating quantity, in particular employing or using at least one of:

at least one encoder;
at least one Hall sensor;

at least one HFI observer;

determining movement of the rotor based on the rotor position indicating quantity;
determining movement of the rotor based on measurement of azimuth position of the rotor position; and/or
applying vector control of the electrical machine.

12. Method according to one of the preceding claims, further comprising:

unlocking the locking system (1575) during the second time span (107, 207, 307); and/or
applying a brake to the rotor in the second time span;
wherein unlocking the locking system comprises extracting a locking pin from a locking hole.

13. Method according to one of the preceding claims, wherein the rotor bearing includes or comprises at least one of:

a fluid film bearing;
a roller bearing;
a ball bearing.

14. Arrangement (450) for aiding unlocking, and in particular unlocking, a rotor of a wind turbine locked by a locking system (1575), the rotor being coupled to an electrical machine of the wind turbine and rotatably supported by a rotor bearing, the arrangement comprising:

a torque reference module (451) for providing a torque reference (400) or an equivalent current reference;
the electrical machine (452, 1571);
a machine controller connected and adapted to control the electrical machine, in order to generate a mechanical torque acting on the rotor according to the torque reference;
wherein the torque reference (400) defines a time course of a target torque,
the arrangement in particular comprising:
an unlocking tool (1578) adapted to unlock the locking system.

15. Wind turbine (1570), comprising:

a rotor;
a locking system (1578) adapted to lock the rotor;
a rotor bearing by which the rotor is rotatably supported (relative to a stator),
an arrangement (450) for aiding unlocking, and in particular unlocking, the rotor according to the preceding claim.

# FIG 1

Torque ref

102

104

105

106

tt2

100

tt1

101

t0    t1    t2    t3  t4                    Time

103                    107

# FIG 2

Torque ref

204    202

tt5

200

201

t5                    Time

203                    207

# FIG 3

# FIG 4

## FIG 5

## FIG 6

## FIG 7

## FIG 8

## FIG 9

## FIG 10

## FIG 11

FIG 12

Europäisches
Patentamt

European
Patent Office

Office européen
des brevets

# EUROPEAN SEARCH REPORT

Application Number

EP 23 16 9402

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2015/308467 A1 (BROKES MICHAEL [DE] ET AL) 29 October 2015 (2015-10-29) * paragraphs [0022] - [0024] * ----- | 1-15 | INV. F03D13/10 |
| A | EP 3 464 886 B1 (ENVISION ENERGY DENMARK APS [DK]) 17 August 2022 (2022-08-17) * paragraph [0007] * ----- | 1 | |
| A | CN 105 114 260 B (DALIAN HUARUI HEAVY IND GROUP) 26 September 2017 (2017-09-26) * the whole document * ----- | 1 | |
| A | US 2016/290318 A1 (MUIK TOBIAS [DE]) 6 October 2016 (2016-10-06) * the whole document * ----- | 1 | |

TECHNICAL FIELDS
SEARCHED    (IPC)

F03D

The present search report has been drawn up for all claims

| Place of search | Date of completion of the search | Examiner |
|---|---|---|
| The Hague | 2 October 2023 | Biloen, David |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 16 9402

This annex lists the patent family members relating to the patent documents cited in the above-mentioned European search report.
The members are as contained in the European Patent Office EDP file on
The European Patent Office is in no way liable for these particulars which are merely given for the purpose of information.

02-10-2023

| Patent document cited in search report | | Publication date | Patent family member(s) | | Publication date |
|---|---|---|---|---|---|
| US 2015308467 | A1 | 29-10-2015 | CA | 2893557 A1 | 19-06-2014 |
| | | | DE | 102012222637 A1 | 12-06-2014 |
| | | | DK | 2929176 T3 | 07-01-2019 |
| | | | EP | 2929176 A1 | 14-10-2015 |
| | | | ES | 2699972 T3 | 13-02-2019 |
| | | | US | 2015308467 A1 | 29-10-2015 |
| | | | WO | 2014090690 A1 | 19-06-2014 |
| EP 3464886 | B1 | 17-08-2022 | CN | 109563808 A | 02-04-2019 |
| | | | DK | 201670408 A1 | 22-01-2018 |
| | | | EP | 3464886 A1 | 10-04-2019 |
| | | | ES | 2930174 T3 | 07-12-2022 |
| | | | PL | 3464886 T3 | 13-03-2023 |
| | | | WO | 2017211366 A1 | 14-12-2017 |
| CN 105114260 | B | 26-09-2017 | NONE | | |
| US 2016290318 | A1 | 06-10-2016 | DE | 102013004580 A1 | 18-09-2014 |
| | | | DK | 2981709 T3 | 25-03-2019 |
| | | | EP | 2981709 A1 | 10-02-2016 |
| | | | ES | 2715016 T3 | 31-05-2019 |
| | | | PT | 2981709 T | 13-02-2019 |
| | | | US | 2016290318 A1 | 06-10-2016 |
| | | | WO | 2014146764 A1 | 25-09-2014 |

EPO FORM P0459

For more details about this annex : see Official Journal of the European Patent Office, No. 12/82